# DEMANDE DE BREVET EUROPEEN

(11) **EP 1 728 742 A1**
(43) Date de publication de la demande: **06.12.2006**
(21) Numéro de dépôt: 06290783.7
(22) Date de dépôt: 15.05.2006
(51) Int. Cl.: B65G 53/60, B65G 69/18, B65D 90/22

(54) **Dispositif de dépoussiérage d'une unité de stockage**

(30) Priorité: 30.05.2005 FR 0505425
(71) Demandeur: GIAT Industries, 78000 Versailles (FR)
(72) Inventeur: Delaine, Patrick, 18230 Saint Doulchard (FR); Devaux, Dominique, 18000 Bourges (FR)
(74) Mandataire: Célanie, Christian

(57) **Abrégé**

L'invention concerne un dispositif de dépoussiérage d'un réservoir (2) pour unité de stockage de produits de nature pulvérulente comportant un moyen d'aspiration (8) de la poussière et un moyen de filtrage (9) de l'air, caractérisé en ce qu'il comporte une conduite (5) de stockage de la poussière filtrée communiquant avec le réservoir (2) au moyen d'ouïes (6) munis de clapets (10).

## Description

Le secteur technique de la présente invention est celui des dispositifs de stockage de produits pulvérulents, et plus particulièrement des dispositifs de dépoussiérage des unités de stockage de produits de nature pulvérulente.

Le stockage et le transport de produits de nature pulvérulente (céréales, produits en poudre, produits sous forme d'agrégats,...) est particulièrement délicat car lorsque l'air de l'unité de stockage est chargé en particules il devient instable et explosif. Ce risque d'explosion est particulièrement élevé lors du remplissage d'une unité de stockage ou de transport (silo, containeur).

La réglementation actuelle préconise lors de la manutention de céréales d'effectuer des opérations de dépoussiérage afin que les poussières générées par les mouvements des grains ne constituent pas une atmosphère explosive. Ce qui revient à dire que la concentration de poussières dans un certain volume d'air ne doit pas être comprise entre la limite inférieure d'explosivité (LIE) et la limite supérieure d'explosivité (LSE). Ces opérations de dépoussiérage sont généralement effectuées à l'aide d'un système d'aspiration d'air, couplé avec un dispositif de séparation de poussière de type cyclone ou de type filtre à manches qui nécessitent un décolmatage régulier. Le problème qui se pose lors du dépoussiérage d'une unité de stockage réside dans le traitement et l'élimination des poussières rejetées. Le traitement de ces rejets s'effectue généralement dans une trémie de récupération centralisée, extérieure aux unités de stockage, ce qui suppose un système global de récupération nécessitant des conduites d'évacuation des rejets dans lesquelles il est difficile de maîtriser la concentration de poussières.

Ainsi, les brevets FR-2632284 et FR-2629064 proposent de réinsérer les poussières extraites dans la masse du produit stocké. Le dispositif décrit dans ces documents comprend une gaine souple par laquelle transite le produit à déverser dans un conteneur et une embase associée à des moyens de rétroaspiration des poussières. Une fois aspirées, les poussières sont recyclées à l'intérieur du produit déversés.

Un inconvénient majeur de ce dispositif réside dans le fait qu'il est prévu pour le remplissage de conteneur mobile, mais n'est pas adapté pour le remplissage d'une unité de stockage de taille plus importante, et notamment un silo.

Le but de la présente invention est de fournir un dispositif de dépoussiérage permettant de réintroduire les poussières dans le produit stocké, tout en maintenant une concentration de poussière peu explosive.

L'invention a donc pour objet un dispositif de dépoussiérage d'un réservoir pour unité de stockage de produits de nature pulvérulente comportant un moyen d'aspiration de la poussière et un moyen de filtrage de l'air, caractérisé en ce qu'il comporte une conduite de réinsertion de la poussière filtrée communiquant avec le réservoir au moyen d'ouïes munis de clapets.

Selon une caractéristique de l'invention, la conduite est intégrée à l'intérieur du réservoir.

Selon une autre caractéristique de l'invention, les clapets sont du type à ouverture interne afin d'autoriser le passage du produit stocké du réservoir vers la conduite et interdisant le passage de la conduite vers le réservoir.

Selon encore une autre caractéristique de l'invention, les clapets sont des clapets déformables.

Selon une autre caractéristique de l'invention, les clapets déformables se présentent sous la forme de volets souples, sensiblement en forme de portion de disque et reliés entre-eux au niveau de la périphérie de l'ouïe afin de réaliser un obturateur sensiblement en forme de disque lorsque le clapet est en position fermée.

Selon une autre caractéristique de l'invention, les volets sont dimensionnés de sorte qu'un espace sépare les volets lorsque le clapet est en position fermé, espace de largeur sensiblement supérieure à la plus grande dimension d'un élément du produit à traiter.

Selon une autre caractéristique de l'invention, la conduite est débouchante dans le réservoir au niveau de son extrémité inférieure.

Selon une autre caractéristique de l'invention, la conduite comporte au niveau de son extrémité supérieure un évent assurant un déconfinement de la conduite en cas d'explosion.

L'invention concerne également une unité de stockage de produits pulvérulents, caractérisé en ce qu'elle comporte un dispositif de dépoussiérage disposé à l'intérieur du réservoir de l'unité.

Enfin, l'invention concerne également un procédé de dépoussiérage d'une unité de stockage de produits de nature pulvérulente, caractérisé en ce qu'on filtre l'air du réservoir de l'unité de stockage, de manière continue ou discontinue, à l'aide d'un filtre à poussières, en en ce qu'on décolmate le filtre à poussières dans la conduite et de façon intermittente, afin de générer dans la conduite un nuage de poussière dont la concentration en poussière est supérieure à la limite de saturation explosive du produit pulvérulent.

Un tout premier avantage du dispositif selon l'invention réside dans la minimisation des risques d'explosion dus à la concentration de poussière aussi bien dans l'unité de stockage que dans la conduite.

Un autre avantage du dispositif réside dans le fait qu'il est adaptable sur tout type d'unité de stockage.

Un autre avantage réside dans la facilité de mise en oeuvre et d'installation du dispositif.

D'autres caractéristiques, détails et avantages de l'invention ressortiront plus clairement de la description donnée ci-après à titre indicatif en relation avec des dessins dans lesquels :
- la figure 1 unique représente schématiquement une unité de stockage selon l'invention, et
- les figures 2a et 2b illustrent un exemple de réalisation d'un clapet déformable.

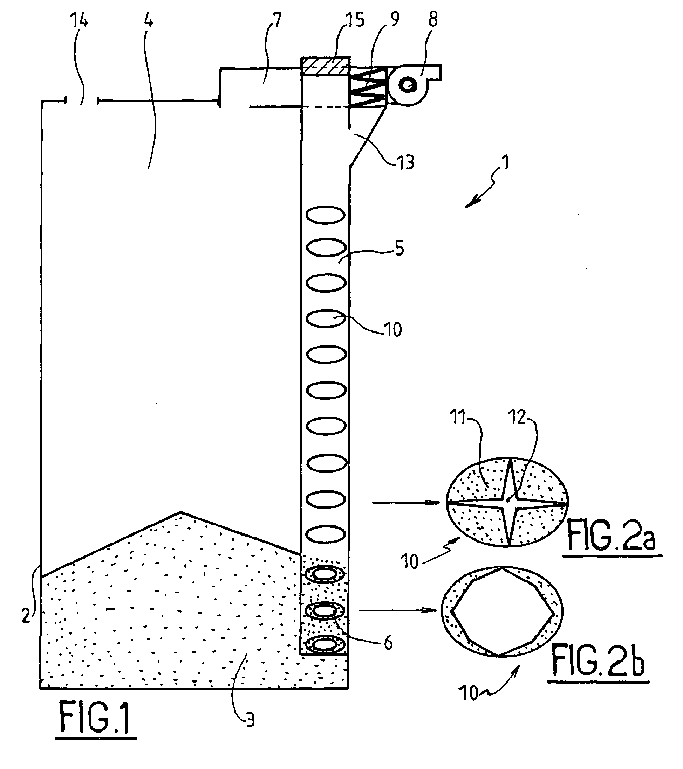

La figure 1 est une représentation schématique d'une unité de stockage 1 de produits de nature pulvérulente selon l'invention. L'unité de stockage 1 est par exemple un silo pour céréales comportant un réservoir 2, une canalisation 7 d'extraction, un moyen d'aspiration 8 de la poussière, un moyen de filtrage 9 de l'air et une conduite 5 de réinsertion de la poussière filtrée dans le réservoir 2. Le moyen de filtrage 9 est préférentiellement un dépoussiéreur à décolmatage, dont la structure est bien connue de l'homme du métier et qui permet d'assurer une alimentation cyclique de la conduite 5 de réinsertion de poussières. La conduite 5 est disposée à l'intérieur du réservoir 2 et comporte des ouïes 6 munis de clapets 10. Les clapets 10 sont du type autorisant le passage du produit 3 stocké du réservoir 2 vers la conduite 5 et interdisant le passage de la conduite 5 vers le réservoir 2. Ces clapets peuvent par exemple être des clapets déformables du type clapets à volets ou secteurs déformables. Le réservoir 2 est muni d'une entrée d'air 14 qui permet de maintenir une pression sensiblement constante dans le réservoir 2. Cette entrée d'air est dimensionnée de manière à maintenir le réservoir 2 en dépression lors de l'extraction de la poussière sous l'effet de l'aspiration du moyen 8.

Les figures 2a et 2b illustrent un exemple de réalisation d'un clapet 10, respectivement en positions fermée et ouverte. Dans cet exemple de réalisation, le clapet 10 comporte des volets souples 11 sensiblement en forme de portion de disque. Ces volets sont reliés entre-eux au niveau de leur périphérie et de la périphérie de l'ouïe 6 afin de réaliser un obturateur sensiblement en forme de disque lorsque le clapet est en position fermée.

Le fonctionnement du dispositif selon l'invention est le suivant : le moyen d'aspiration 8 aspire de manière continue ou discontinue l'air présent dans le réservoir par la canalisation 7 d'extraction. L'entrée d'air 14 permet de maintenir une pression sensiblement constante dans le réservoir 2. On filtre l'air 4 du réservoir 2 à l'aide du filtre à poussières 9 disposé en amont du moyen d'aspiration 8. On décolmate de façon intermittente le filtre à poussières 9 et les poussières récoltées tombent alors, par l'intermédiaire d'un conduit 13 de décolmatage, au fond de la conduite 5 et génèrent dans cette conduite un nuage de poussière dont la concentration en poussière est supérieure à la limite de saturation explosive du produit pulvérulent (LSE). Les clapets 10 sont prévus de façon à obturer les ouïes de sorte à confiner le nuage de poussière à l'intérieur de la conduite 5. Au fur et à mesure du remplissage du réservoir, la hauteur des grains de céréale augmente jusqu'à atteindre la première ouïe 6. La pression exercée par la masse de céréales ensilées sur le clapet 10 provoque la déformation élastique des volets 11 et l'ouverture du clapet. Les céréales viennent alors se mélanger aux poussières dans la conduite 5 pour reconstituer un mélange homogène non explosif dans lequel la poussière est piégée par la masse de céréales.

Il en est de même lorsque la hauteur des grains atteint les ouies suivantes.

On notera sur la figure 1 que les trois ouies inférieures sont ouvertes alors que les ouies supérieures sont fermées.

La conduite 5 est réalisée débouchante dans le réservoir au niveau de son extrémité inférieure. Une telle caractéristique permet d'une part de réaliser le vidage de la conduite en même temps que le vidage du réservoir et d'autre part de limiter les risques d'explosion en début de remplissage du réservoir.

En effet, en début de remplissage de l'unité de stockage, les masses de poussières issues du décolmatage sont trop faibles pour atteindre la LSE dans la conduite 5. Il faut donc rejeter ces poussières en dehors de la conduite, ce qui revient de fait à positionner l'extrémité ouverte inférieure de la conduite au-dessus du fond du réservoir. Dans un mode préférentiel de réalisation, la hauteur de l'extrémité ouverte de la conduite 5 sera déterminée en fonction des dimensions du réservoir, de la vitesse de remplissage et de la nature du produit pulvérulent.

Dans un mode de réalisation particulier, on prévoit un espace libre 12 entre les volets 11 du clapet 10, même lorsque ce dernier est en position fermée. Cet espace 12 est sensiblement supérieur à la plus grande dimension d'un élément du produit à traiter (céréale, bille, ...). Une telle réalisation permet de réduire les risques d'accumulation d'éléments entre les volets qui constituent une source potentielle d'échauffement.

Dans un mode de réalisation particulier, l'extrémité supérieure de la conduite 5 est obturée par un évent de sécurité 15 assurant le déconfinement de la conduite en cas d'explosion. Cet évent de sécurité sera par exemple réalisé au moyen d'un disque de rupture.

## Revendications

1. Dispositif de dépoussiérage d'un réservoir (2) pour unité de stockage de produits de nature pulvérulente comportant un moyen d'aspiration (8) de la poussière et un moyen de filtrage (9) de l'air, **caractérisé en ce qu'**il comporte une conduite (5) de réinsertion de la poussière filtrée communiquant avec le réservoir (2) au moyen d'ouïes (6) munis de clapets (10).

2. Dispositif de selon la revendication 1, **caractérisé en ce que** la conduite (5) est intégrée à l'intérieur du réservoir (2).

3. Dispositif selon la revendication 1 ou 2, **caractérisé en ce que** les clapets (10) sont du type à ouverture interne afin d'autoriser le passage du produit stocké du réservoir (2) vers la conduite (5) et interdisant le passage de la conduite (5) vers le réservoir (2).

4. Dispositif selon l'une des revendications 1 à 3, **caractérisé en ce que** les clapets (10) sont des clapets déformables.

5. Dispositif selon la revendication 4, **caractérisé en ce que** les clapets déformables (10) se présentent sous la forme de volets souples (11), sensiblement en forme de portion de disque et reliés entre-eux au niveau de la périphérie de l'ouïe (6) afin de réaliser un obturateur sensiblement en forme de disque lorsque le clapet est en position fermée.

6. Dispositif de selon la revendication 5, **caractérisé en ce que** les volets (11) sont dimensionnés de sorte qu'un espace (12) sépare les volets lorsque le clapet (10) est en position fermé, espace (12) de largeur sensiblement supérieure à la plus grande dimension d'un élément du produit à traiter.

7. Dispositif de selon l'une des revendications 1 à 6, **caractérisé en ce que** la conduite (5) est débouchante dans le réservoir (2) au niveau de son extrémité inférieure.

8. Dispositif de selon l'une des revendications 1 à 7, **caractérisé en ce que** la conduite (5) comporte au niveau de son extrémité supérieure un évent (15) assurant un déconfinement de la conduite (5) en cas d'explosion.

9. Unité de stockage (1) de produits pulvérulents, **caractérisé en ce qu'**elle comporte un dispositif de dépoussiérage selon l'une des revendications précédentes disposé à l'intérieur du réservoir (2) de l'unité (1).

10. Procédé de dépoussiérage d'une unité de stockage (1) de produits de nature pulvérulente selon la revendication 9, **caractérisé en ce qu'**on filtre l'air du réservoir (2) de l'unité de stockage (1), de manière continue ou discontinue, à l'aide d'un filtre à poussières (9), en **en ce qu'**on décolmate le filtre à poussières (9) dans la conduite (5) et de façon intermittente, de sorte à générer dans la conduite (5) un nuage de poussière dont la concentration en poussière est supérieure à la limite de saturation explosive du produit pulvérulent.
